# FASCICULE DE BREVET EUROPEEN

(11) **EP 1 216 864 B1**
(45) Date de publication et mention de la délivrance du brevet: **17.10.2007**
(21) Numéro de dépôt: 01460079.5
(22) Date de dépôt: 17.12.2001
(51) Int. Cl.: B60J 1/20

(54) **Store à boîtier inclinable pour automobile**
Kippbares Fensterrollo für Autos
Tiltable roller blind for cars

(30) Priorité: 20.12.2000 FR 0016917
(43) Date de publication de la demande: 26.06.2002
(73) Titulaire: WAGON SAS, 79300 Bressuire (FR)
(72) Inventeur: Moreau, Stéphane, 37500 Cravant les Coteaux (FR)
(74) Mandataire: Vidon, Patrice

(56) Documents cités:
- DE-U- 9 010 881
- DE-U- 9 015 220
- DE-U- 29 506 213
- FR-A- 2 617 776
- FR-A- 2 667 350
- FR-A- 2 769 945
- US-A- 6 079 683

## Description

Le domaine de l'invention est celui des stores, notamment pour véhicule automobile. Plus précisément, l'invention concerne les stores dont l'extrémité libre du rideau est prévue pour venir en appui contre une vitre et/ou un élément du véhicule, lorsque le rideau est déployé.

Classiquement, un store de ce type présente une toile, ou rideau, formant écran en position déployée. Une des extrémités de cette toile, dite extrémité libre, est généralement montée sur un rouleau, ou tube d'enroulement mobile en rotation. L'autre extrémité de la toile est munie d'une barre de tirage. En position reployée, la toile est essentiellement enroulée autour du tube d'enroulement, et la barre de tirage se trouve donc au voisinage de ce tube. Pour déployer la toile, on agit sur la barre de tirage (ou plus généralement sur l'extrémité libre de la toile), de façon à l'éloigner du tube d'enroulement, ce qui entraîne le déploiement de la toile.

On prévoit souvent ou plusieurs leviers de guidage de la barre de tirage, ou des moyens similaires (pantographes, pistons,...), assurant le guidage et/ou le maintien de l'écran en position déployée.

On connaît ainsi des stores électriques présentant deux leviers dont le déplacement est actionné par un moteur. Sous l'effet d'une commande adéquate, le moteur entraîne le déplacement des leviers, qui entraînent eux-mêmes la barre de tirage, et par conséquent la toile. Des moyens de rappel agissent sur le tube d'enroulement ou les leviers, de façon que le ré-enroulement de la toile se fasse dans de bonnes conditions.

Selon une autre approche, c'est le tube qui est motorisé. Dans ce cas, les leviers ont une fonction de guidage et de maintien.

On connaît également des stores à pantographe dans lesquels deux bielles sont montées en croix de façon articulée à la barre de tirage, et sont associées à des organes d'entraînement montés dans le boîtier, tels que, par exemple, une vis sans fin.

Ces techniques présentent l'avantage de proposer un store qui soit autoporteur, c'est-à-dire suffisamment rigide en position déployée, sans nécessiter de moyens de guidage liés au châssis du véhicule, tels que des rails latéraux. En outre, ils permettent un montage, et le cas échéant, un démontage, aisé et rapide, par exemple sur une tablette arrière amovible d'un véhicule automobile.

En général, il est souhaitable que ces stores, en position déployée, viennent prendre appui contre un élément de l'habitacle, ou d'une vitre telle que la lunette arrière. En effet, si l'on peut considérer ces stores comme autoporteurs, il n'en reste pas moins qu'ils sont soumis aux secousses et vibrations transmises par le véhicule lors de son déplacement. On constate alors que, si l'extrémité libre du rideau, éventuellement via la barre de tirage ne prend pas appui sur (voire n'est pas efficacement plaquée contre) un support, elle vient cogner ou vibrer contre son support, occasionnant un cliquetis et/ou d'autres nuisances sonores pour les passagers des véhicules. On peut aussi craindre à la longue un risque de détériorations du store et/ou de la vitre.

On pourrait envisager de forcer l'extrémité libre à se diriger vers son support. Mais cela n'est généralement pas possible, car celle-ci se trouverait en contact avant la fin du déploiement de la toile, empêchant sa mise en place correcte, et risquant de détériorer le matériel.

En conséquence, et notamment du fait des jeux relativement importants existants dans les véhicules, il est peu aisé de monté efficacement de tels stores, en série.

Il existe quelques techniques de réglage des stores, telle que celle décrite dans le document FR 2 617 776, qui divulgue toutes les caractéristiques du préambule de la revendication 1. Ces techniques sont complexes à mettre en oeuvre, encombrantes et peu efficaces.

L'invention a notamment pour objectif de pallier ces inconvénients de l'état de la technique.

Plus précisément, un objectif de l'invention est de fournir un store du type autoporteur qui permette de supprimer, ou à tout le moins, de réduire les effets des vibrations ou secousses transmises par le véhicule, qu'il s'agisse des nuisances sonores ou des détériorations éventuelles.

Un autre objectif de l'invention est de fournir un tel store qui puisse être monté facilement et rapidement sans outillage complexe.

L'invention a également pour objectif de fournir un tel store dont la position peut être modifiée dans le temps (par exemple lorsque le hayon a été changé, ou si la plage de déploiement de la toile varie, ...).

Ces objectifs ainsi que d'autres qui apparaîtront plus clairement par la suite sont atteints à l'aide d'un store pour véhicule automobile selon la revendication 1. Il comprend un boîtier présentant une fente à l'intérieur de laquelle un rideau peut circuler entre une position déployée et une position reployée.

Selon l'invention, ledit boîtier est équipé de moyens pour modifier la position dudit boîtier par rapport à son support, de façon à contrôler la position du rideau déployé par rapport à la vitre qu'il occulte.

De cette façon, la position du store est réglable, notamment pour qu'en position déployée, la barre de tirage et/ou les moyens d'entraînement du rideau viennent en appui contre la vitre et/ou un autre élément du véhicule, de façon suffisamment efficace pour éviter qu'ils cognent ou vibrent. Le réglage peut donc consister à rapprocher la barre de tirage et/ou les éléments d'entraînement de façon à obtenir un appui constant ou quasi constant lorsque la toile est déployée.

Selon une autre approche, le réglage peut à l'inverse consister à éloigner suffisamment la barre de tirage et/ou les éléments d'entraînement pour que ceux-ci ne viennent jamais, ou quasiment jamais, cogner contre la lunette arrière.

Lesdits moyens de modification de la position agissent sur ledit support de façon à faire varier la position angulaire dudit boîtier autour d'un axe sensiblement parallèle à son axe longitudinal et/ou autour d'un axe sensiblement perpendiculaire à son axe longitudinal.

L'un ou l'autre des modes de réalisation pourra notamment être choisi en fonction de la forme de la lunette arrière ou de la tablette arrière, des positions respectives de la lunette arrière et de la tablette arrière, ou des contraintes imposées par le véhicule et son montage.

Selon l'inventionl, lesdits moyens de modification de la position comprennent au moins un élément se prolongeant, sur une longueur variable, sous ledit boîtier, pour venir prendre appui sur ledit support.

On obtient ainsi une sorte de béquille solidaire du boîtier et de longueur variable grâce à laquelle on pourra rehausser ou rabaisser une partie du boîtier.

Selon l'invention, ledit élément comprend un pas de vis coopérant avec un écrou, pour régler ladite longueur variable.

Ledit écrou forme une molette manoeuvrable manuellement.

De cette façon, il n'est pas nécessaire d'avoir recours à un outillage pour faire varier la position du boîtier par rapport à son support. L'opération de réglage est ainsi rapide et aisée lors du montage, mais aussi ultérieurement et à tout moment par une personne non spécialisée, par exemple si des modifications ont été apportées au hayon du véhicule ou si la plage de déploiement de la toile a varié. Il est, bien entendu, toutefois que les moyens de modification de la position du boîtier peuvent intégrer un écrou ou similaire nécessitant le recours à un outillage léger, sans sortir du cadre de l'invention.

Selon d'autres modes de réalisation, ledit élément comprend avantageusement une came, un plan incliné, un jeu de cales et/ou une crémaillère, permettant de régler ladite longueur variable.

Avantageusement, le store comprend des moyens d'indexation de la position dudit boîtier par rapport audit support, définissant un nombre prédéfini de positions possibles. Dans ce cas, lesdits moyens d'indexation comprennent des moyens élastiques coopérant avec des crans ménagés dans ledit écrou.

De cette manière, la personne intervenant sur le réglage de la position du boîtier du store dispose d'une sorte de repère lui facilitant son intervention. Le monteur, avec l'habitude, sait directement le nombre de crans à mettre en oeuvre pour obtenir le réglage idéal.

Préférentiellement, ledit boîtier présente au moins un bossage, permettant d'accentuer l'inclinaison induite par lesdits moyens de modification de la position.

Un tel bossage pourra être placé en différents endroits et selon différentes configurations sur le boîtier de façon à définir le ou les axes autour desquels la position angulaire du boîtier pourra être modifiée.

Alternativement et/ou en complément, le store peut coopérer au moins un élément formant cale intercalé entre ledit bossage et ledit support.

On peut ainsi augmenter la plage de variations possibles de la position angulaire du boîtier. Une telle cale (rondelle ou pièce plastique, par exemple, ou entretoise,...) s'avère en outre être un moyen de protection efficace du support sur lequel prend appui la vis qui pourrait entraîner une usure prématurée du support, et assure une isolation électrique entre le boîtier et le reste du véhicule.

Selon une solution préférentielle, lesdits moyens de modification de la position du boîtier sont montés à l'une des extrémités dudit boîtier. Dans ce cas, les moyens de motorisation sont préférentiellement portés par l'autre extrémité dudit boîtier.

Selon une autre solution préférentielle, des moyens de modification de la position du boîtier par rapport à son support sont prévus à chaque extrémité dudit boîtier.

D'autres caractéristiques et avantages de l'invention apparaîtront plus clairement à la lecture de la description suivante de trois modes de réalisation préférentiels, donnés à titre de simples exemples illustratifs et non limitatifs, et des dessins annexés, parmi lesquels :
- la figure 1 représente une vue en perspective de l'extrémité d'un store équipé de moyens d'inclinaison selon l'invention ;
- la figure 2 représente une autre vue en perspective du store de la figure 1, le boîtier n'étant pas rapporté pour mettre en évidence les moyens d'inclinaison ;
- les figures 3a et 3b illustrent de façon schématique un premier mode de mise en oeuvre de l'invention selon lequel on peut faire varier la position angulaire du boîtier autour d'un axe sensiblement perpendiculaire à son axe longitudinal ;
- les figures 4a et 4b illustrent de façon schématique un deuxième mode de mise en oeuvre de l'invention selon lequel on peut varier la position angulaire du boîtier autour d'un axe sensiblement parallèle à son axe longitudinal ;
- les figures 5a et 5b illustrent de façon schématique un troisième mode de mise en oeuvre de l'invention cumulant les principes des figures 3a, 3b et 4a, 4b, pour faire varier les positions angulaires autour de deux axes distincts.

Comme indiqué précédemment, l'invention propose des moyens pour le réglage de la position du boîtier d'un store par rapport à son support (qui est, dans l'exemple décrit, une tablette arrière) et, en position déployée du rideau du store, par rapport à une vitre (en l'occurrence une lunette arrière).

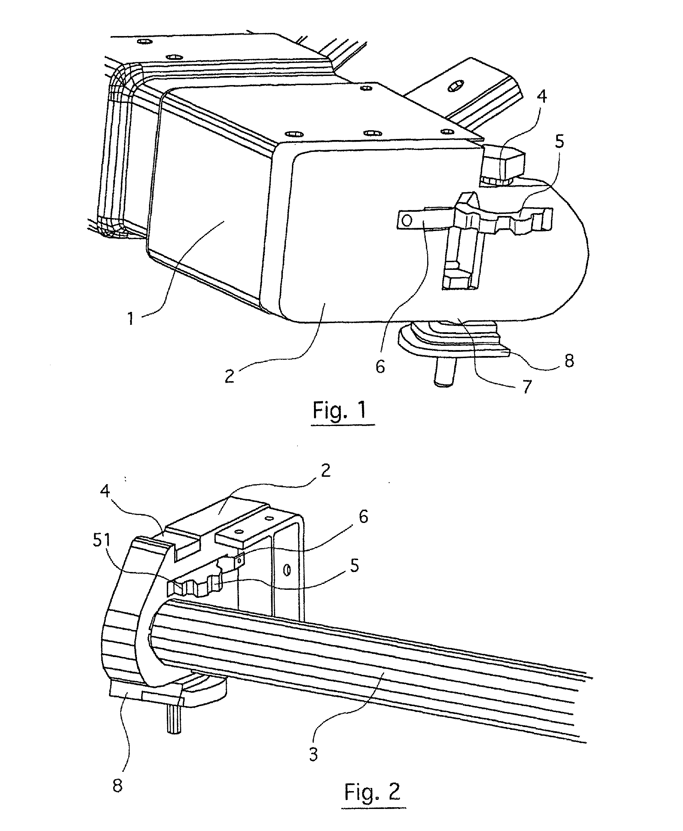

Les figures 1 et 2 présentent un exemple de store à enrouleur selon l'invention (et plus précisément la partie du store comprenant les moyens de l'invention).

Ce store présente classiquement un boîtier 1 prévu pour être monté sur la lunette arrière ou en tout emplacement adéquat. Ce boîtier 1 est rapporté et solidarisé à des paliers 2 sur lesquels est monté à rotation un tube d'enroulement 3. Le rideau (non représenté) est monté sur ce tube d'enroulement 3.

Le store selon l'invention peut être manuel, l'utilisateur actionnant le déploiement ou le repliement du rideau en agissant directement sur une barre de tirage solidarisée à l'extrémité libre du rideau de façon classique en soi. On peut également prévoir des moyens de motorisation du tube 3 et/ou des leviers de maintien et/ou de guidage de la toile, par exemple électrique.

On rappelle en outre que le store selon l'invention est du type autoporteur, c'est-à-dire qu'il est équipé de moyens d'entraînement de la toile qui assurent le maintien de la toile en position déployée sans qu'il soit nécessaire de rapporter des moyens de guidage et/ou de maintien (rails par exemple) à proximité de la vitre à occulter.

Selon le mode de réalisation illustré par les figures 1 et 2, les moyens pour faire varier la position du boîtier par rapport à son support comprennent une vis 4 traversant le palier 2 et un écrou 5 coopérant avec la vis 4, de façon qu'une rotation de l'écrou 5 entraîne un déplacement axial de la vis 4. Ainsi, en faisant varier la longueur sur laquelle s'étend la vis 4 sous le boîtier 1, ce dernier pourra être rehaussé ou rabaissé par rapport au support.

D'autres modes de réalisation pourront prévoir de placer la vis 4 et l'écrou 5 en d'autres emplacements du palier ou même du boîtier, ou encore sur une partie solidaire du boîtier et déportée de celui-ci.

D'autres techniques sont également envisageables pour faire varier la position angulaire du boîtier : on pourra recourir par exemple à une came, un plan incliné, à un jeu de cales et/ou une crémaillère. Les mises en oeuvre correspondantes apparaîtront directement à l'homme du métier.

On notera que l'écrou 5 est moleté de façon à procurer un moyen d'indexation de la position du boîtier, les crans 51 de l'écrou 5 coopérant avec des moyens élastiques, en l'occurrence un ressort à lame 6 fixé ici par rivetage sur le palier 2, de telle sorte que l'utilisateur ressente une légère résistance (et entende le "clic" correspondant) lorsqu'il tourne l'écrou d'un cran. Les crans 51 pourront être répartis à la périphérie de l'écrou 5 de façon à provoquer une variation de la position angulaire du boîtier, par exemple de l'ordre du degré.

Le palier 2 présente en outre un bossage 7 formant un point d'appui sur le support ou sur un élément rapporté sur le support, ce point d'appui constituant aussi un point de pivotement autour duquel la position du boîtier peut être modifiée.

Ce bossage 7, ainsi que la vis 4, sont ici positionnés et configurés sur le palier 2 de façon que la position angulaire du boîtier puisse varier autour d'un axe sensiblement parallèle à l'axe longitudinal du boîtier, et passant par le bossage 7.

Il est bien entendu que les positions du bossage 7 et de la vis 4 peuvent être envisagées différemment, par exemple de façon à obtenir une variation de la position angulaire du boîtier autour d'un axe sensiblement parallèle à l'axe longitudinal du store.

Par ailleurs, il est également possible de prévoir la présence d'un ensemble vis et écrou (ou de moyens équivalents), ou de plusieurs, sur un des paliers ou sur chacun des paliers supportant le tube d'enroulement.

En outre, comme cela a été indiqué précédemment, le store peut être motorisé. Dans ce cas, un des paliers peut porter les moyens pour faire varier la position angulaire du boîtier par rapport à son support, tandis que l'autre palier porte des moyens de motorisation du tube d'enroulement (ou des leviers).

Dans le mode de réalisation décrit, une entretoise 8 est intercalée entre le boîtier du store et son support. Cette entretoise 8 permet, en coopérant avec le bossage 7, d'augmenter la plage angulaire sur laquelle la position du store peut être modifiée.

Elle forme en outre une surface d'appui rigide, contrairement à certains revêtements utilisés pour la fabrication de tablettes arrière. On notera que l'objet de l'entretoise est essentiellement de former cale. L'élément peut prendre des formes quelconques, et par exemple être simplement constituée d'une rondelle en matériau plastique ou autres.

Cette cale joue également avantageusement, un rôle d'isolant électrique entre le boîtier et le reste du véhicule.

Selon les modèles de véhicules, et donc selon le réglage à effectuer, l'épaisseur de cette cale 8 pourra varier. Il est ainsi aisé d'utiliser le même boîtier dans différents véhicules.

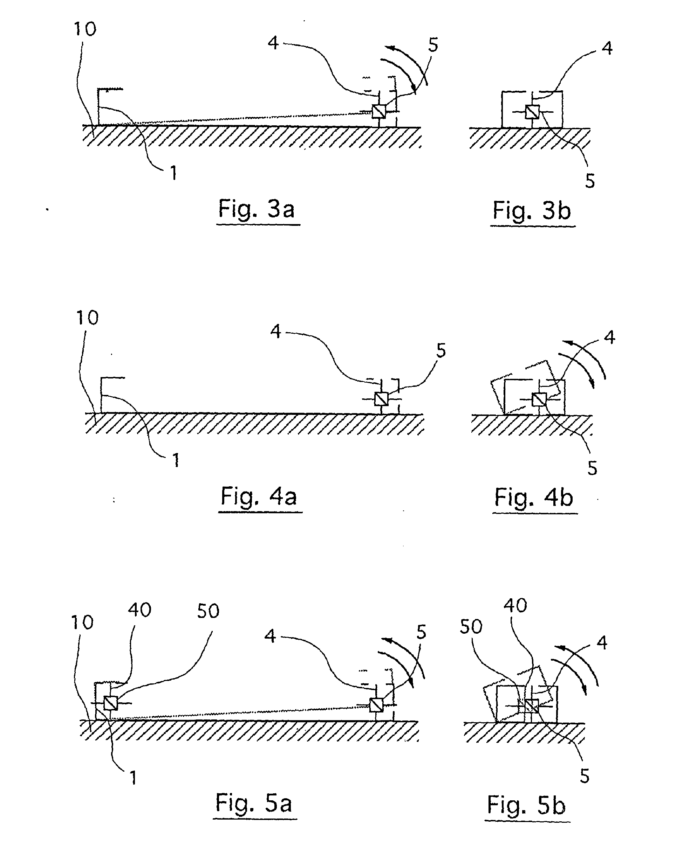

Les figures 3a à 5b illustrent de façon schématique, et à titre d'exemples, trois modes de réalisation permettant de faire varier, de façons différentes, les positions angulaires du boîtier 1 par rapport à son support.

Sur les figures 3a et 3b, on a représenté un store selon l'invention, comprenant un ensemble vis 4 et écrou 5. Dans ce mode de réalisation, la vis 4 est positionnée sensiblement sur l'axe longitudinal du boîtier 1, à une des extrémités de ce dernier. En opérant une rotation de l'écrou 5, on provoque une déplacement vertical de la vis 4 de façon à ce qu'elle prenne plus ou moins appui sur le support 10 du store. On peut ainsi va varier la position angulaire du boîtier 1 par rapport au support 10, le boîtier pouvant prendre une position telle que représentée en trait pointillé sur la figure 3a.

Il est bien entendu que l'inclinaison du boîtier représenté en trait pointillé sur les figures 3a, 4b, 5a et 5b est fortement exagérée pour la clarté de l'exposé, un réglage de la position angulaire du boîtier de quelques degrés étant généralement suffisant pour positionner correctement le store en position déployée par rapport à la vitre qu'il occulte.

Sur les figures 4a et 4b, on a représenté un mode de réalisation dans lequel la vis 4 est positionnée de façon sensiblement écartée de l'axe longitudinal du boîtier 1. En opérant une rotation de l'écrou 5, on provoquera un déplacement vertical de la vis 4 de façon à ce le boîtier puisse prendre cette fois une position telle que représentée en trait pointillé sur la figure 4b.

Sur les figures 5a et 5b, on a représenté un troisième mode de réalisation dans lequel le store comprend deux ensembles vis et écrou, respectivement 4, 5 et 40, 50, un ensemble étant présent à chaque extrémité du boîtier 1. De cette façon, en intervenant de façon appropriée sur les écrous 5 et 50, on pourra obtenir une combinaison des positions angulaires telles que représentées en trait pointillé.

A nouveau, les ensembles vis et écrou peuvent être remplacés par des moyens assurant la même fonction.

En rapportant un bossage et/ou une cale tels que décrits précédemment, on pourra modifier le point ou l'axe de pivotement autour duquel on fait varier la position angulaire du boîtier, ainsi que l'amplitude du mouvement.

D'autres modes de réalisation basés sur le principe de fonctionnement qui vient d'être décrit sont bien sûr envisageables sans sortir du cadre de la présente invention, qui est définit par les revendications.

## Revendications

1. Store pour véhicule automobile comprenant un boîtier (1) présentant une fente à l'intérieur de laquelle un rideau peut circuler entre une position déployée et une position reployée,
ledit boîtier (1) étant équipé de moyens pour modifier la position dudit boîtier (1) par rapport à son support (10), de façon à contrôler la position du rideau déployé par rapport à la vitre qu'il occulte, **caractérisé par**
lesdits moyens pour modifier la position dudit boîtier comprenant au moins un élément présentant un pas de vis (4) et se prolongeant, sur une longueur variable, sous ledit boîtier pour venir en appui sur ledit support, et une molette (5) formant écrou montée sur ledit pas de vis, et pouvant être manoeuvrée manuellement pour régler ladite longueur variable.

2. Store selon la revendication 1, **caractérisé en ce que** lesdits moyens de modification de la position agissent sur ledit support (10) de façon à faire varier la position angulaire dudit boîtier (1) autour d'un axe sensiblement parallèle à son axe longitudinal.

3. Store selon l'une quelconque des revendications 1 et 2, **caractérisé en ce que** lesdits moyens de modification de la position agissent sur ledit support (10) de façon à faire varier la position angulaire dudit boîtier (1) autour d'un axe sensiblement perpendiculaire à son axe longitudinal,

4. Store selon l'une quelconque des revendications 1 à 3, **caractérisé en ce que** ledit élément comprend une came, un plan incliné, un jeu de cales et/ou une crémaillère, permettant de régler ladite longueur variable.

5. Store selon l'une quelconque des revendications 1 à 4, **caractérisé en ce qu**'il comprend des moyens d'indexation (6) de la position dudit boîtier (1) par rapport audit support (10), définissant un nombre prédéfini de positions possibles.

6. Store selon les revendications 1 et 5 , **caractérisé en ce que** lesdits moyens d'indexation (6) comprennent des moyens élastiques coopérant avec des crans (51) ménagés dans ladite molette (5).

7. Store selon l'une quelconque des revendications 1 à 6, **caractérisé en ce que** ledit boîtier (1) présente au moins un bossage (7), permettant d'accentuer l'inclinaison induite par lesdits moyens de modification de la position.

8. Store selon la revendication 7, **caractérisé en ce qu**'il coopère avec au moins un élément formant cale (8) intercalé entre ledit bossage (7) et ledit support (10).

9. Store selon l'une quelconque des revendications 1 à 8, **caractérisé en ce que** lesdits moyens de modification de la position du boîtier sont montés à l'une des extrémités dudit boîtier.

10. Store selon la revendication 9, **caractérisé en ce que** l'autre extrémité dudit boîtier porte des moyens de motorisation.

11. Store selon la revendication 9, **caractérisé en ce que** lesdits moyens de modification de la position du boîtier (1) par rapport à son support (10) sont prévus à chaque extrémité dudit boîtier (1).

## Claims

1. Blind for a vehicle, comprising a case (1) having a slit within which a curtain can move between an unfolded position and a folded-up position, the said case (1) being provided with means for altering the position of the said case (1) with respect to its support (10), so as to control the position of the unfolded curtain with respect to the window that it covers, **characterised by** the said means for altering the position of the said case comprising at least one element having a thread (4) and extending, over a variable distance, underneath the said case so as to rest on the said support, and a knurled wheel (5) forming a nut mounted on the said thread, and able to be operated manually so as to regulate the said variable distance.

2. Blind according to claim 1, **characterised in that** the said means for altering the position act on the said support (10) so as to vary the angular position of the said case (1) about an axis substantially parallel to its longitudinal axis.

3. Blind according to either one of claims 1 and 2, **characterised in that** the said means for altering the position act on the said support (10) so as to vary the angular position of the said case (1) about an axis substantially perpendicular to its longitudinal axis.

4. Blind according to any one of claims 1 to 3, **characterised in that** the said element comprises a cam, an inclined plane, a set of shims and/or a rack, enabling the said variable distance to be adjusted.

5. Blind according to any one of claims 1 to 4, **characterised in that** it comprises means (6) for indexing the position of the said case (1) with respect to the said support (10), said means defining a predefined number of possible positions.

6. Blind according to any one of claims 1 and 5, **characterised in that** the said indexing means (6) comprise elastic means co-operating with notches (51) provided in the said knurled wheel (5).

7. Blind according to any one of claims 1 to 6, **characterised in that** the said case (1) has at least one boss (7), enabling the inclination resulting in the said means for altering the position to be increased.

8. Blind according to claim 7, **characterised in that** it co-operates with at least one cam-forming element (8) interposed between the said boss (7) and the said support (10).

9. Blind according to any one of claims 1 to 8, **characterised in that** the said means for altering the position of the case are mounted on one of the ends of the said case.

10. Blind according to claim 9, **characterised in that** the other end of the said case carries motorisation means.

11. Blind according to claim 9, **characterised in that** the said means for altering the position of the case (1) with respect to its support (10) are provided at each end of the said case (1).

## Patentansprüche

1. Fensterrollo für Kraftfahrzeuge mit einem Gehäuse (1) mit einem Schlitz, in dem ein Vorhangrollo zwischen einer ausgezogenen und einer eingezogenen Position laufen kann,
wobei dieses Gehäuse (1) mit Mitteln ausgestattet ist, um die Position dieses Gehäuses (1) in seiner Halterung (10) zu verstellen, so dass die Position des ausgezogenen Vorhangrollos gegenüber der Scheibe, die er abdeckt, beeinflusst werden kann,
**dadurch gekennzeichnet, dass** die Mittel zum Ändern der Position dieses Gehäuses mindestens ein Element, das ein Gewinde (4) umfasst und sich über eine variable Länge unter dem Gehäuse erstreckt um an der Halterung anzuliegen, und ein Rädchen (5), das eine Mutter ausbildet, die auf dieses Gewinde geschraubt ist und von Hand zur Einstellung der variablen Länge gedreht werden kann, umfassen.

2. Fensterrollo nach Anspruch 1,
**dadurch gekennzeichnet, dass** diese Mittel zum Ändern der Position auf die Halterung (10) so wirken, dass die Winkelstellung des Gehäuses (1) um eine Achse verstellt wird, die im Wesentlichen parallel zu ihrer Längsachse ist.

3. Fensterrollo nach einem der Ansprüche 1 und 2,
**dadurch gekennzeichnet, dass** diese Mittel zum Ändern der Position so auf die Halterung (10) wirken, dass die Winkelstellung des Gehäuses (1) um eine Achse verstellt wird, die im Wesentlichen senkrecht zu ihrer Längsachse ist.

4. Fensterrollo nach einem der Ansprüche 1 bis 3,
**dadurch gekennzeichnet, dass** dieses Element einen Nocken, eine schräge Fläche, einen Keilsatz und/oder eine Zahnstange zum Einstellen dieser variablen Länge umfasst.

5. Fensterrollo nach einem der Ansprüche 1 bis 4,
**dadurch gekennzeichnet, dass** es Mittel (6) zum Indexieren der Position dieses Gehäuses (1) gegenüber der Halterung (10) umfasst, die eine vorbestimmte Anzahl an möglichen Positionen definieren.

6. Fensterrollo nach den Ansprüchen 1 und 5,
**dadurch gekennzeichnet, dass** diese Mittel zum Indexieren (6) Federsmittel umfassen, die mit den Kerben (51) in diesem Rädchen (5) zusammenwirken.

7. Fensterrollo nach einem der Ansprüche 1 bis 6,
**dadurch gekennzeichnet, dass** das Gehäuse (1) mindestens einen Wulst (7) aufweist, der die durch die Mittel zum Ändern der Position hervorgerufene Neigung verstärkt.

8. Fensterrollo nach Anspruch 7,
**dadurch gekennzeichnet, dass** es mit mindestens einem Element zusammenwirkt, das ein Keilselement (8) zwischen diesem Wulst (7) und der Halterung (10) bildet.

9. Fensterrollo nach einem der Ansprüche 1 bis 8,
**dadurch gekennzeichnet, dass** die Mittel zum Ändern der Position des Gehäuses an einem Ende des Gehäuses montiert sind.

10. Fensterrollo nach Anspruch 9,
**dadurch gekennzeichnet, dass** auf dem anderen Ende des Gehäuses Antriebsmittel montiert sind.

11. Fensterrollo nach Anspruch 9,
**dadurch gekennzeichnet, dass** die Mittel zum Ändern der Position des Gehäuses (1) in seiner Halterung (10) an jedem Ende dieses Gehäuses (1) vorgesehen sind.
